# EUROPEAN PATENT APPLICATION

(11) **EP 2 613 429 A1**
(43) Date of publication of application: **10.07.2013**
(21) Application number: 10856253.9
(22) Date of filing: 03.09.2010
(51) Int. Cl.: H02K 21/10, H02K 7/10

(54) **DISC-TYPE COAXIAL COUNTER-ROTATION GENERATOR AND WIND POWER GENERATION DEVICE USING DISC-TYPE COAXIAL COUNTER-ROTATION GENERATOR**

(71) Applicant: Winpro Co., Ltd., Niigata 950-0965 (JP)
(72) Inventor: HARA, Akio, Niigata-shi Niigata 950-0965 (JP)
(74) Representative: Isarpatent
(86) International application number: PCT/JP2010/065107
(87) International publication number: WO 2012/029168

(57) **Abstract**

[Object] The present invention provides a disk-shaped coaxial inversion generator capable of ensuring a large generated power output and capable of attaining the reduction of mechanical loss, the realization of a low-noise structure and the facilitation of maintenance.

[Constitution] The disk-shaped coaxial inversion generator 1 of the present invention comprises a stationary annular shaft 2 provided at its central area with a support strut and fixed with the support strut; a disk-shaped housing main body 11 composed of an integral structure of a disk-shaped upper housing 12 and a disk-shaped lower housing 13, rotatably supported by the stationary annular shaft 2, and configured to be rotated by, for example, a wind turbine; a disk-shaped first flux linkage magnet 21 attached to an internal surface of the upper housing 12; a disk-shaped second flux linkage magnet 22 attached to an internal surface of the lower housing; a disk-shaped coil body 31 whose coil portion 32 faces a field between the first flux linkage magnet 21 and the second flux linkage magnet 22 in noncontact relationship within the upper housing 12 and lower housing 13, the disk-shaped coil body 31 having its central area rotatably mounted to the stationary annular shaft 2; inversion magnets 41 protruding from an outer circumference of the stationary annular shaft 2; a disk-shaped driving magnet 51 attached to the internal surface of the lower housing in an arrangement facing the inversion magnets 41 in noncontact relationship; a disk-shaped driven magnet 61 attached to the coil body 31 in an arrangement facing the inversion magnets 41 in noncontact relationship; and a generated power output extraction portion 71 disposed across an inner circumference portion of the coil body 31 and the stationary annular shaft 2.

## Description

### TECHNICAL FIELD

The present invention relates to a disk-shaped coaxial inversion generator and a wind driven generating equipment including the disk-shaped coaxial inversion generator.

### BACKGROUND ART

With respect to the wind driven generating equipment attracting attention in recent years, it is generally known, for example, that a wind turbine is rotated by the use of wind power being a natural energy, and that electricity is generated by means of a generator by the use of the torque of the wind turbine to thereby obtain electric power derived from wind power being a natural energy, and that the electric power is supplied to various load facilities.

With respect to, in particular, wind driven generating equipments employing a wind turbine of vertical shaft/vertical vane type among various wind driven generating equipments, many thereof have a structure such that a wind turbine is disposed at an upper portion of a strut; a disk-shaped generator is coaxially disposed immediately under the same; the torque of the wind turbine is transmitted to the disk-shaped generator; and there is obtained a generated power output based on a relative velocity between a magnet and a coil, one of which is fixed while the other is rotatable, in the disk-shaped generator.

For obtaining a larger generated power output through the efficient utilization of wind energy, it is required to increase a relative velocity between a magnet and a coil.

Further, as the wind driven generating equipment is often installed in areas where many residents live, such as an urban district, it is required for the generator for use in the wind driven generating equipment to ensure maximized robustness and low-noise.

For example, the generator disclosed in patent reference 1 is proposed as a generator belonging to this technical field.

The generator of patent reference 1 is one comprising a case having a magnet and a coil with a core member housed therein, and a fixing portion for fixing the case adjacently to an outer rotating body, wherein there are provided a first rotating means configured to be driven by the outer rotating body to thereby rotate the magnet and a second rotating means for rotating the core member or the coil in a direction opposite to that of the magnet, and wherein the first rotating means and the second rotating means are rotated by a first roller and a second roller disposed in a fashion rotating in contact relationship opposite to each other with the center of the outer rotating body interposed therebetween. This generator is described as finding application in a wind driven generator, a bicycle dynamo, etc.

With respect to the above-mentioned generator of patent reference 1, a relative velocity between the magnet and the coil would be increased to thereby increase the generated power output. However, use is made of a structure in which the rollers are disposed in contact relationship opposite to each other with the center of the outer rotating body interposed therebetween. Accordingly, the application of the generator of patent reference 1 as a generator for use in the above-mentioned wind driven generating equipment comprising a wind turbine of vertical shaft/vertical vane type would be practically difficult.

### CITATION LIST

### PATENT LITERATURE

Patent reference 1: JP-A-2003-235223

### SUMMARY OF INVENTION

### TECHNICAL PROBLEM

The problem to be solved by the invention is that there is no disk-shaped coaxial inversion generator capable of ensuring a large generated power output and capable of attaining the reduction of mechanical contact areas, namely, reduction of mechanical loss, such as wear, the realization of a low-noise structure and the facilitation of maintenance, which disk-shaped coaxial inversion generator finds appropriate application in a wind driven generating equipment equipped with a wind turbine of vertical shaft/vertical vane type.

### SOLUTION TO PROBLEM

The disk-shaped coaxial inversion generator of the present invention comprises a stationary annular shaft provided at its central area with a support strut and fixed with the support strut; a disk-shaped housing main body with a hollow interior provided at its central area with a hole for support strut insertion and rotatably supported by the stationary annular shaft, the disk-shaped housing main body configured to be rotated by a driving source utilizing a natural energy; a disk-shaped flux linkage magnet attached to an internal surface of the housing main body; a disk-shaped coil body whose coil portion faces a magnetic field region produced by the flux linkage magnet in noncontact relationship within the housing main body, the disk-shaped coil body having its central area rotatably mounted to the stationary annular shaft in a fashion of noncontact to the housing main body; a plurality of rotatable inversion magnets each with its rotation support shaft provided in a direction orthogonal to an axial direction of the stationary annular shaft, the rotatable inversion magnets protruding radially from an outer circumference of the stationary annular shaft; a disk-shaped driving magnet attached to the internal surface of the housing main body in an arrangement facing the inversion magnets in noncontact relationship; a disk-shaped driven magnet attached to the disk-shaped coil body in an arrangement facing the inversion magnets in noncontact relationship and in an arrangement facing the driving magnet with the inversion magnets interposed therebetween; and a generated power output extraction portion disposed across an inner circumference portion of the coil body and the stationary annular shaft, so that the inversion magnets are rotated in noncontact relationship by a magnetic force produced by the driving magnet rotated together with the disk-shaped housing main body by means of the driving source, and so that in accordance with the rotation of the inversion magnets, by their magnetic force, the driven magnet and the coil body are rotated in noncontact relationship in a direction opposite to that of the housing main body, and so that a relative velocity between the flux linkage magnet of the housing main body and the coil portion of the coil body is caused to be greater than a rotating velocity of the housing main body per se, and so that any generated power output occurring at the coil portion of the coil body is extracted outside through the generated power output extraction portion and a power cable connected to the generated power output extraction portion.

### ADVANTAGEOUS EFFECTS OF INVENTION

The present invention provides a disk-shaped coaxial inversion generator in which, on the basis of the driving force of a driving source utilizing a natural energy, a housing main body and a coil body housed therein are coaxially inverted in noncontact relationship by magnetic force, so that the relative velocity between a flux linkage magnet within the housing main body and a coil portion within the coil body is greater than the rotating velocity of the housing main body per se, thereby realizing a large generated power output. In the provided disk-shaped coaxial inversion generator, mechanical contact areas can be reduced, so that the mechanical loss, such as wear, can be reduced; a low-noise structure attributed to the reduction of mechanical contact areas can be realized; and the maintenance can be facilitated.

Further, the present invention provides a wind driven generating equipment of high practical value comprising a disk-shaped coaxial inversion generator, which not only attains the reduction of mechanical loss, realization of a low-noise structure and facilitation of maintenance attributed to the disk-shaped coaxial inversion generator but also realizes a strikingly large generated power output (namely, high efficiency of conversion from wind energy to electric power).

### BRIEF DESCRIPTION OF DRAWINGS

FIG. 1 is a diagrammatic external perspective view of a disk-shaped coaxial inversion generator according to an embodiment of the present invention.
FIG. 2 is a diagrammatic exploded perspective view of the disk-shaped coaxial inversion generator according to an embodiment of the present invention.
FIG. 3 is a diagrammatic exploded elevational view of the disk-shaped coaxial inversion generator according to an embodiment of the present invention.
FIG. 4 is a partial enlarged view showing a shaft support structure of coil body by a stationary annular shaft, and a generated power output extraction portion, in the disk-shaped coaxial inversion generator according to an embodiment of the present invention.
FIG. 5 is an explanatory view showing a form of torque transmission by magnetic force among a first flux linkage magnet, an inversion magnet and a second flux linkage magnet in the disk-shaped coaxial inversion generator according to an embodiment of the present invention.
FIG. 6 is a diagrammatic explanatory view showing the principle of operation of the disk-shaped coaxial inversion generator according to an embodiment of the present invention.
FIG. 7 is a diagrammatic elevational view of a wind driven generating equipment in which the above disk-shaped coaxial inversion generator is used.
FIG. 8 is a partial perspective view showing a support strut, the disk-shaped coaxial inversion generator and a wind turbine in exploded forms in the wind driven generating equipment in which the disk-shaped coaxial inversion generator is used.
FIG. 9 is a diagrammatic sectional view showing a mount structure of a support strut, the disk-shaped coaxial inversion generator and a wind turbine in the wind driven generating equipment in which the disk-shaped coaxial inversion generator is used.

### BEST MODE FOR CARRYING OUT THE INVENTION

The object of the present invention is to provide a disk-shaped coaxial inversion generator capable of ensuring a large generated power output and capable of attaining the reduction of mechanical contact areas, namely, reduction of mechanical loss, such as wear, the realization of a low-noise structure and the facilitation of maintenance, which disk-shaped coaxial inversion generator finds appropriate application in a wind driven generating equipment equipped with a wind turbine of vertical shaft/vertical vane type. The object has been achieved by a disk-shaped coaxial inversion generator comprising a stationary annular shaft provided at its central area with a support strut and fixed with the support strut; a disk-shaped housing main body composed of an integral structure of a disk-shaped upper housing provided at its central area with a hole for support strut insertion and a disk-shaped lower housing provided at its central area with a hole for support strut insertion, the disk-shaped housing main body rotatably supported by the stationary annular shaft and configured to be rotated by a driving source utilizing a natural energy; a disk-shaped first flux linkage magnet attached to an internal surface of the upper housing; a disk-shaped second flux linkage magnet attached to an internal surface of the lower housing in an arrangement facing the first flux linkage magnet; a disk-shaped coil body whose coil portion faces a field between the first flux linkage magnet and the second flux linkage magnet in noncontact relationship within the upper housing and lower housing, the disk-shaped coil body having its central area rotatably mounted to the stationary annular shaft in a fashion of noncontact to the upper housing and lower housing; a plurality of rotatable inversion magnets each with its rotation support shaft provided in a direction orthogonal to an axial direction of the stationary annular shaft, the rotatable inversion magnets protruding radially from an outer circumference of the stationary annular shaft; a disk-shaped driving magnet attached to the internal surface of the lower housing in an arrangement facing the inversion magnets in noncontact relationship; a disk-shaped driven magnet attached to the disk-shaped coil body in an arrangement facing the inversion magnets in noncontact relationship and in an arrangement facing the driving magnet with the inversion magnets interposed therebetween; and a generated power output extraction portion disposed across an inner circumference portion of the coil body and the stationary annular shaft, so that the inversion magnets are rotated in noncontact relationship by a magnetic force produced by the driving magnet rotated together with the disk-shaped housing main body by means of the driving source, and so that in accordance with the rotation of the inversion magnets, by their magnetic force, the driven magnet and the coil body are rotated in noncontact relationship in a direction opposite to that of the housing main body, and so that a relative velocity between the first and second flux linkage magnets of the housing main body and the coil portion of the coil body is caused to be twice that attained when either the flux linkage magnets or the coil body is rotated while the other is fixed, and so that any generated power output equivalent to 4 times that realized when either the flux linkage magnets or the coil body is rotated while the other is fixed occurring at the coil portion of the coil body is extracted outside through the generated power output extraction portion and a power cable connected to the generated power output extraction portion.

### EXAMPLE

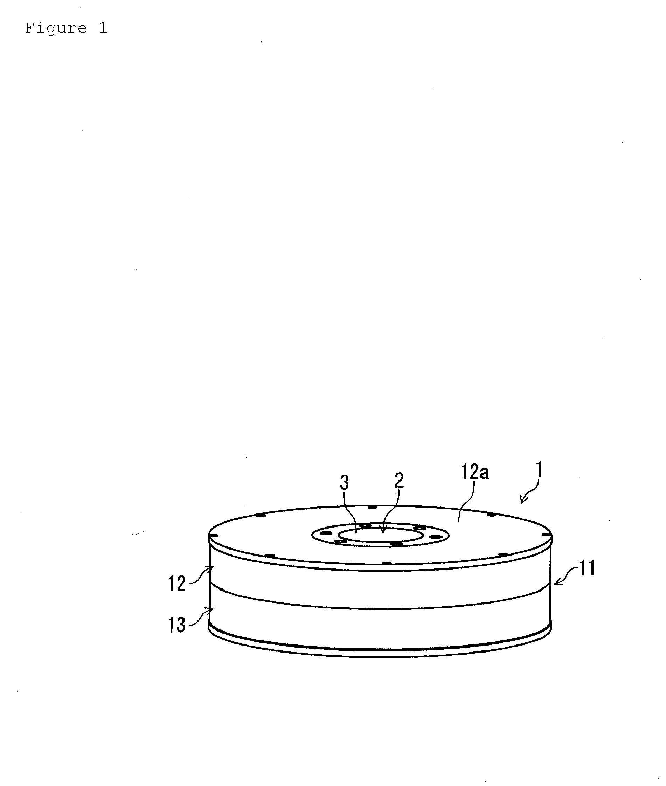

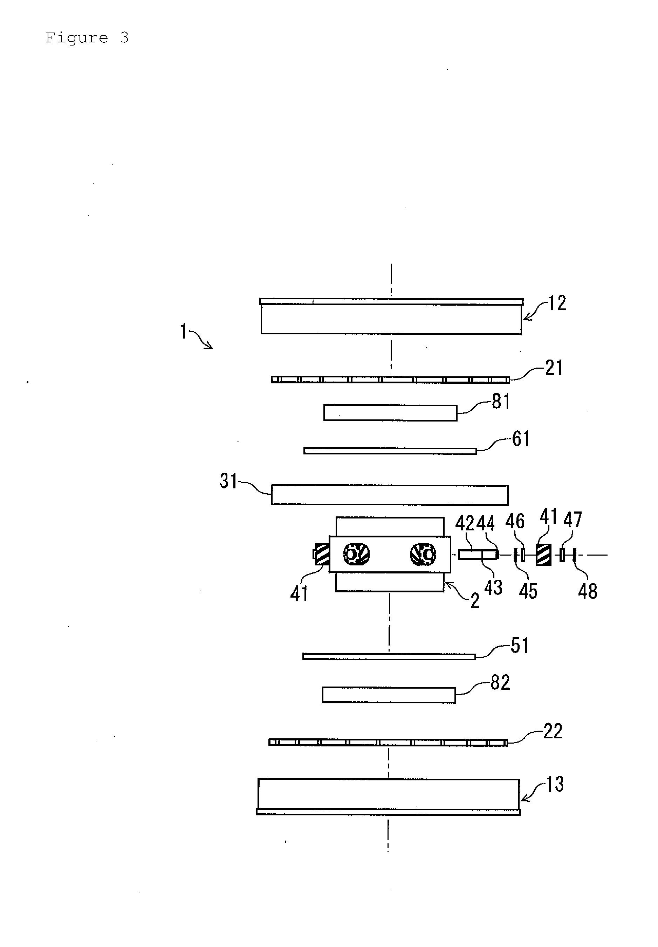

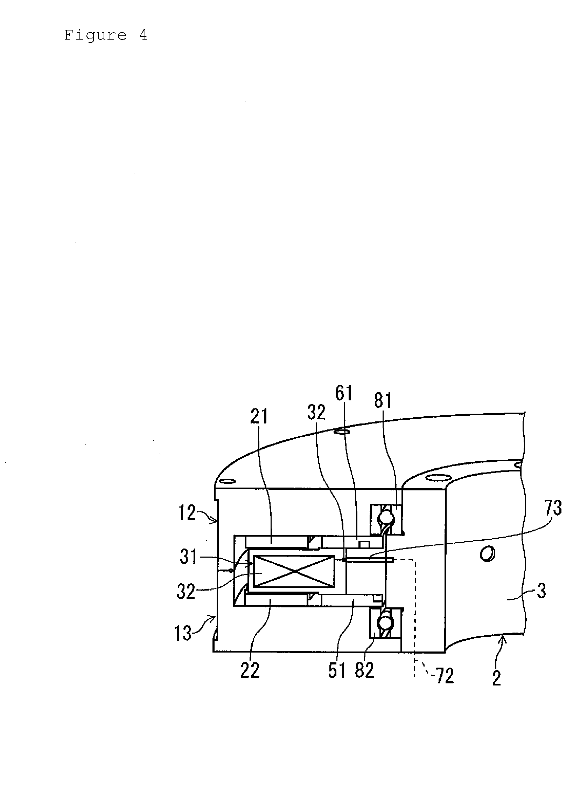

A disk-shaped coaxial inversion generator 1 according to an embodiment of the present invention will be described in detail below referring to FIGS. 1 to 6.

The disk-shaped coaxial inversion generator 1 according to an embodiment of the present invention comprises a housing main body 11 whose entirety is shaped like a disk as shown in FIG. 1. This disk-shaped coaxial inversion generator 1 is configured so that power generation is efficiently outputted by rotating the housing main body 11 by means of a driving source utilizing a natural energy, for example, a wind turbine 101 rotated by wind power to be described hereinafter.

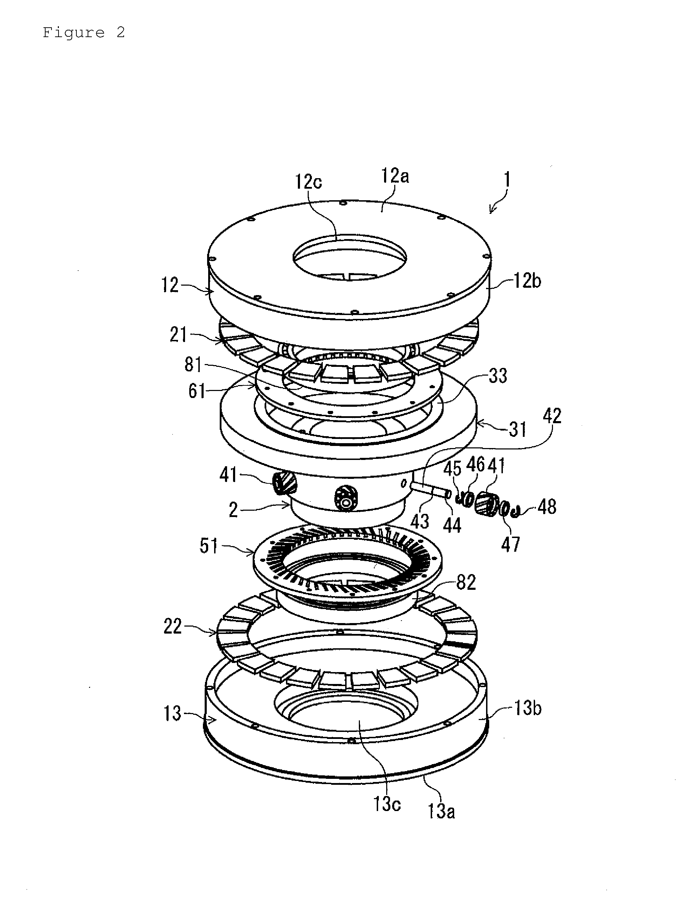

Referring to FIG. 2, this disk-shaped coaxial inversion generator 1 comprises, for example, a stationary annular shaft 2 provided at its central-area through hole 3 with a tiered strut portion 103 constituting a support strut 102 of a wind turbine 101 to be described in detail hereinafter, the stationary annular shaft 2 fixed with the tiered strut portion 103; and a hollow disk-shaped housing main body 11. The housing main body 11 includes an upper housing 12 shaped like a round plate comprising a circular end surface portion 12a provided at its central area with a hole for support strut insertion 12c and a cylindrical side surface portion 12b provided so as to protrude vertically from the entire outer circumference of the circular end surface portion 12a, the cylindrical side surface portion 12b directed downward, and includes a lower housing 13 shaped like a round plate comprising a circular end surface portion 13a provided at its central area with a hole for support strut insertion 13c and a cylindrical side surface portion 13b provided so as to protrude vertically from the entire outer circumference of the circular end surface portion 13a, the cylindrical side surface portion 13b directed upward, wherein the cylindrical side surface portions 12b, 13b are closely bonded to each other so as to form a unitary construction and wherein the circular end surface portions 12a, 13a are arranged in parallel relationship. The disk-shaped coaxial inversion generator 1 further comprises a flat disk-shaped first flux linkage magnet 21 attached to the internal surface of the upper housing 12 on its circumferential side by means of, for example, an adhesive or the like; a flat disk-shaped second flux linkage magnet 22 attached to the internal surface of the lower housing 13 on its circumferential side in an arrangement facing the first flux linkage magnet 21 by means of, for example, an adhesive or the like; and a coil body 31 shaped like substantially a disk as a whole. The coil body 31 is so structured that a coil portion 32 formed by winding a conductive wire provided on the circumferential side faces a field between the first flux linkage magnet 21 and the second flux linkage magnet 22 in noncontact relationship within the upper housing 12 and the lower housing 13, and that its central area is rotatably mounted via a coil bearing 33 to the stationary annular shaft 2 in a fashion of noncontact to the upper housing 12 and the lower housing 13. The disk-shaped coaxial inversion generator 1 still further comprises six rotatable inversion magnets 41 radially protruding with, for example, 60° interspaces provided, for each of which a rotation support shaft 42 shaped like a round bar extends from the outer circumference of the stationary annular shaft 2 in a direction orthogonal to the axial direction of the stationary annular shaft 2; a flat disk-shaped driving magnet 51 attached to the internal surface of the lower housing 13 in a position close to the outer circumference of the stationary annular shaft 2 in an arrangement facing the inversion magnets 41 in noncontact relationship by means of, for example, an adhesive or the like; a disk-shaped driven magnet 61 attached to the surface of the disk-shaped coil body 31 on its side facing the inversion magnets 41 in an arrangement facing the inversion magnets 41 in noncontact relationship and in an arrangement facing the driving magnet 51 with the inversion magnets 41 interposed therebetween by means of, for example, an adhesive or the like; a generated power output extraction portion 71 for the extraction of generated power output disposed across the coil body 31 and the stationary annular shaft 2; and a power cable 72 having its one end connected to the generated power output extraction portion 71 and having its other end led through the interior portion of the stationary annular shaft 2 outside the disk-shaped coaxial inversion generator 1 according to this embodiment per se.

As a leading path for the power cable 72, there can be mentioned an example in which a hole for the insertion of the power cable 72 is provided in advance in a thick wall portion of the stationary annular shaft 2.

The generated power output extraction portion 71 has an arrangement in which a coil terminal 32a of the coil portion 32 faces the inner circumference portion of the coil body 31, and in which, for example, a brush (e.g., a carbon brush or the like) 73 is disposed on the outer circumference portion of the stationary annular shaft 2 in a position corresponding to the coil terminal 32a, and in which an end of the power cable 72 is connected to the brush 73.

According to application modes, the brush 73 can be replaced by, for example, a liquid metal brush means using a liquid metal, such as mercury, or a sparkless brush means or the like, or a brushless structure.

With respect to the array of magnetic poles of first flux linkage magnet 21 and second flux linkage magnet 22 disposed so as to face each other in noncontact relationship with the coil portion 32 interposed therebetween, for example, a magnetic pole array in which a portion of the first flux linkage magnet 21 facing the side of the coil portion 32 and a portion of the second flux linkage magnet 22 facing the side of the coil portion 32 have different magnetic poles, namely, the one is an N-pole while the other is an S-pole alternately continues at equal intervals through the entire circumferences of the first and second flux linkage magnets 21, 22.

Accordingly, the alternating magnetic flux generated by the first and second flux linkage magnets 21, 22 is caused to interlink the coil portion 32 so that alternating-current power occurs at the coil portion 32. The alternating-current power is extracted through the coil terminal 32a thereof.

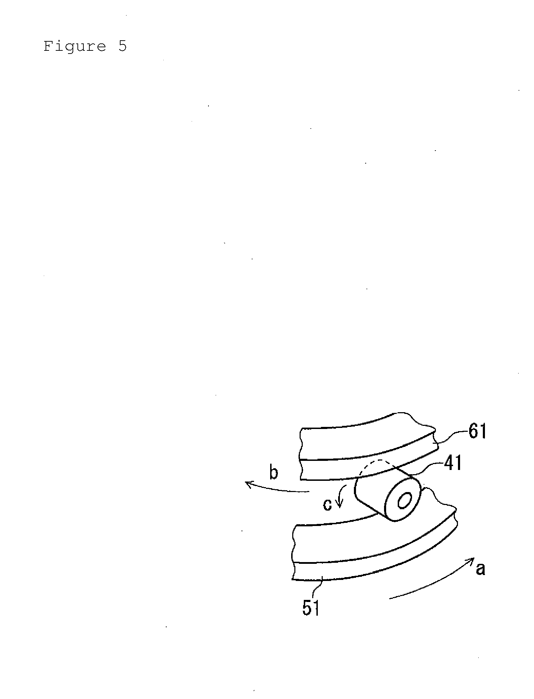

Referring to FIG. 5, the transmission of torque from the driving magnet 51 to each inversion magnet 41 is carried out by rotating the inversion magnet 41 while the surface of the driving magnet 51 on its side of the inversion magnet 41 and a portion of the inversion magnet 41 facing the driving magnet 51 are caused to have different magnetic poles so that when the driving magnet 51 is rotated, attraction is acted on the inversion magnet 41, resulting in noncontact pulling thereof by the driving magnet 51.

Similarly, the transmission of torque from the inversion magnet 41 to the driven magnet 61 is carried out by rotating the driven magnet 61, accordingly, the coil body 31 as well in the direction opposite to that of the driving magnet 51 (coaxial inversion) while a portion of the inversion magnet 41 facing the driven magnet 61 and the surface of the driven magnet 61 on its side of the inversion magnet 41 are caused to have different magnetic poles so that when the inversion magnet 41 is rotated as shown in FIG. 5, attraction is acted on the driven magnet 61, resulting in noncontact pulling thereof by the inversion magnet 41.

As a mode of mounting the inversion magnet 41 to the stationary annular shaft 2, there can be mentioned a mode comprising, referring to FIG. 2, protruding a rotation support shaft 42 shaped like a round bar from the outer circumference of the rotation support shaft 42, in which two circular grooves 43, 44 are provided on its side of the stationary annular shaft 2 and on its side of a protrusion end in the outer-circumference portion, first fixing an E-ring 45 to the circular groove 43, subsequently fitting in sequence a washer 46, the inversion magnet 41 and a washer 47 to the rotation support shaft 42, and finally fixing an E-ring 48 to the circular groove 44 with the result that the inversion magnet 41 is rotatably supported by the rotation support shaft 42.

Now, the shaft support structure of the upper housing 12 and lower housing 13 on the stationary annular shaft 2 will be described. The inner circumference portion of the upper housing 12 is rotatably mounted through an upper annular bearing 81 to the upper outer circumference of the stationary annular shaft 2. The inner circumference portion of the lower housing 13 is rotatably mounted through a lower annular bearing 82 to the lower outer circumference of the stationary annular shaft 2.

Accordingly, the housing main body 11 composed of an integral structure of the upper housing 12 and the lower housing 13 is axially supported by the upper annular bearing 81 and the lower annular bearing 82 so as to be rotatable around the stationary annular shaft 2.

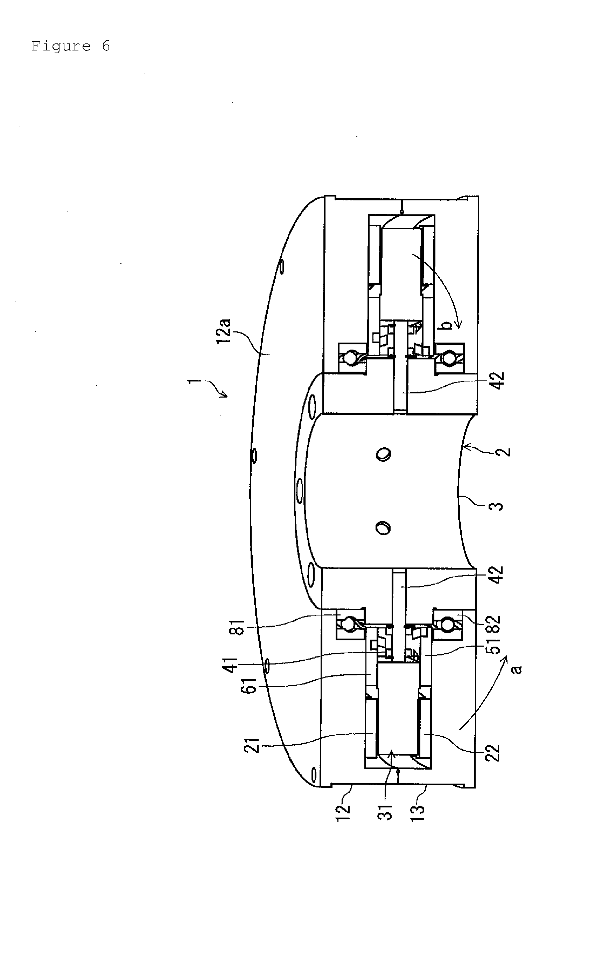

The power generating operation of the disk-shaped coaxial inversion generator 1 according to this embodiment will be described in detail below with reference to FIG. 6.

In the disk-shaped coaxial inversion generator 1 according to this embodiment, when the housing main body 11 composed of an integral structure of the upper housing 12 and the lower housing 13 is rotated by a driving source utilizing, for example, natural energy in the direction of arrow a (anticlockwise direction) of FIG. 6 around the stationary annular shaft 2, the disk-shaped driving magnet 51 attached to the lower housing 13 of the housing main body 11 is rotated in the direction of arrow a together with the housing main body 11.

In accordance with the rotation of the driving magnet 51 in the direction of arrow a, each of the inversion magnets 41 is rotated around the rotation support shaft 42 in the direction of arrow c of FIG. 6 while being pulled in noncontact relationship by the driving magnet 51.

When each of the inversion magnets 41 is rotated in the direction of arrow c of FIG. 6, an attraction from each of the inversion magnets 41 acts on the driven magnet 61, so that the inversion magnets 41 rotate the driven magnet 61, accordingly the coil body 31, in the direction opposite to that of the driving magnet 51, namely, the direction of arrow b (anticlockwise direction) while pulling them in noncontact relationship.

As a result, the housing main body 11 is rotated in the direction of arrow a while the coil body 31 housed thereinside is rotated in the direction of arrow b opposite to the direction of arrow a (coaxial inversion).

When coaxial inversion occurs between the housing main body 11 and the coil body 31 housed thereinside as stated above, providing that the velocity V2 (rotating velocity) attained when either the flux linkage magnets or the coil body is rotated while the other is fixed is "1," the relative velocity V1 between the first and second flux linkage magnets 21, 22 within the housing main body 11 and the coil portion 32 within the coil body 31 is twice the same, "2" (V1 = 2V2). Consequently, a generated power output as large as "4 times" the generated power output obtained when either the flux linkage magnets or the coil body is rotated while the other is fixed can be realized at the coil portion 32 within the coil body 31. Namely, the disk-shaped coaxial inversion generator 1 ensuring strikingly large generated power output (that is, high conversion efficiency from natural energy to electric power) can be realized.

The disk-shaped coaxial inversion generator 1 according to this embodiment is configured so that not only the transmission of torque from the driving magnet 51 to the inversion magnets 41 but also the transmission of torque from the inversion magnets 41 to the driven magnet 61 is carried out in noncontact relationship by the use of magnetic attraction. Accordingly, there can be exerted a striking effect such that, as compared with the use of, for example, gears being mechanical parts as the means for the coaxial inversion of the housing main body 11 and coil body 31, the areas of mechanical contact can be reduced, so that any mechanical loss, such as wear, can be reduced, and a low-noise structure can be realized by the reduction of the areas of mechanical contact.

Moreover, because gears being mechanical parts are not used as the means for the coaxial inversion, it is not required to lubricate the portion of this means with oil, thereby facilitating the maintenance of the disk-shaped coaxial inversion generator 1.

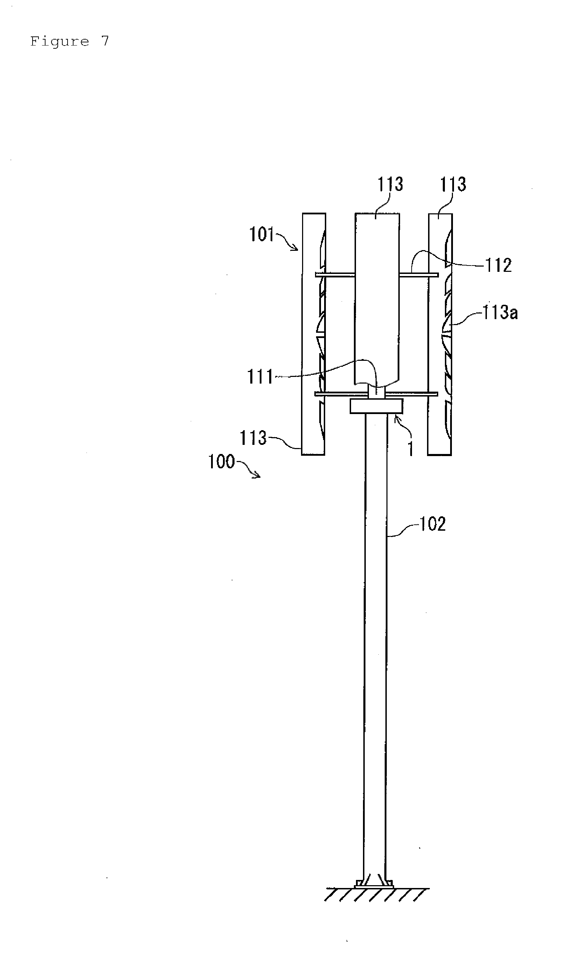

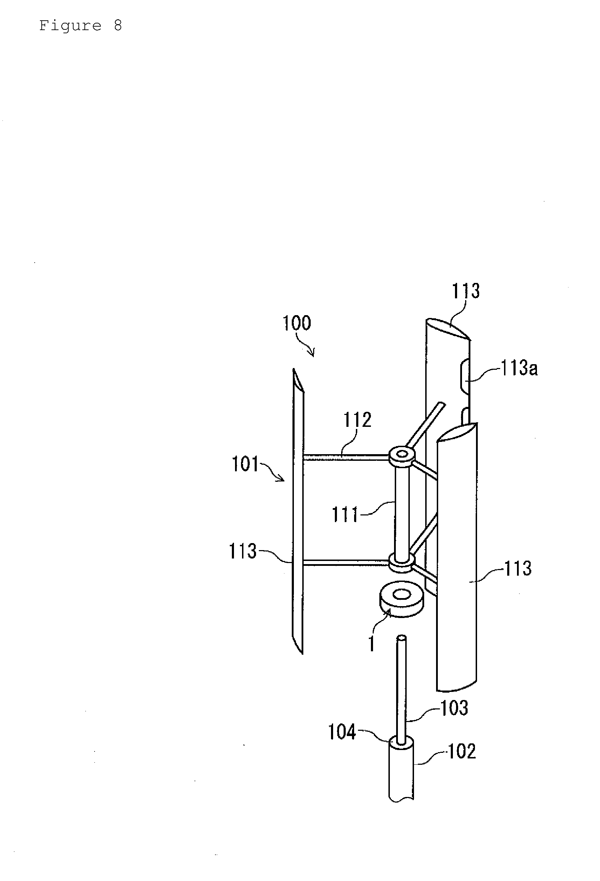

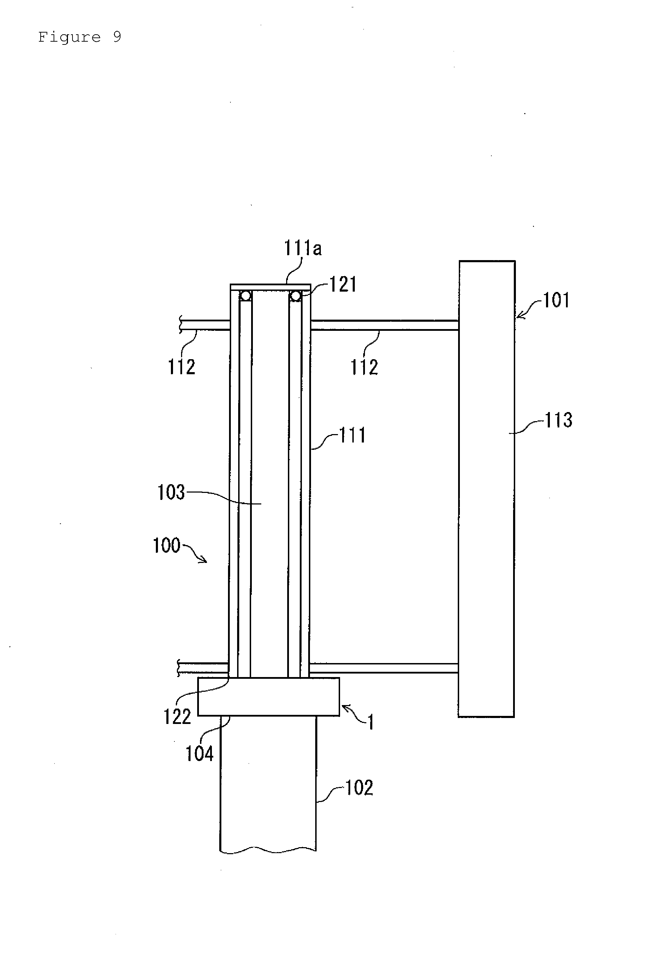

Now, a wind driven generating equipment 100 comprising the disk-shaped coaxial inversion generator 1 according to this embodiment will be described with reference to FIGS. 7 to 9.

The wind driven generating equipment 100 comprises a support strut 102 having at its upper portion a tiered strut portion 103 which has a diameter smaller than that of the portion other than the upper portion and is shaped like a round bar, which support strut 102 is vertically erected at an installation location in various areas, such as an urban district, a suburb, a mountain-ringed region or a seaside area, being hollow at the portion other than the upper portion; the disk-shaped coaxial inversion generator 1 disposed on a tier portion 104 of the tiered strut portion 103 with a gap therebetween; and, for example, a Gyromill type (vertical shaft/vertical vane type) wind turbine 101 fitted to the tiered strut portion 103 from above.

The wind turbine 101 comprises a cylindrical wind turbine shaft body 111 disposed so as to be rotatable around the tiered strut portion 103; two sets, arranged one above the other, of triple arms 112 projected in lateral directions radially from the cylindrical wind turbine shaft body 111 with given interspaces (120 ° interspaces from the cylindrical wind turbine shaft body 111); and three vertically arranged blades 113 of given length each having a streamlined cross section or end face in a direction orthogonal to the direction of the length, each of the blades 113 supported by projecting ends of the two sets, arranged one above the other, of arms 112.
Each of the blades 113 in its reverse surface is provided with an opening portion 113a for efficient capturing of wind energy from the reverse side.

The cylindrical wind turbine shaft body 111 is fitted to the outer circumference of the tiered strut portion 103 on the disk-shaped coaxial inversion generator 1 from above. The cylindrical wind turbine shaft body is provided at its upper inner-circumference portion with a bearing portion 121 mounted to an upper-end portion of the tiered strut portion 103, and is further provided at its lower portion with a coupling portion 122 with a circular end surface portion 12a of the upper housing 12 of the housing main body 11, the coupling portion 122 fitted around a hole for support strut insertion 12c of the circular end surface portion 12a of the upper housing 12, so that the wind turbine 101 is supported rotatably around the tiered strut portion 103 on the basis of a both-end shaft support structure realized by the bearing portion 121 and the housing main body 11 of the disk-shaped coaxial inversion generator 1.

The upper end of the cylindrical wind turbine shaft body 111 is closed with, for example, a cover portion 111a so as to create a structure capable of preventing rainwater or the like from permeating into the inside of the cylindrical wind turbine shaft body 111.
For the purpose of the size increase, strength securement at strong wind and weight reduction of the blades 113, the contour portion of each of the blades 113 is formed of a material selected from the group consisting of an aluminum alloy, a titanium alloy, a carbon fiber material, an FRP (fiber-reinforced plastic) material and the like, and the interior of the blade 113 is reinforced with urethane foam, reinforced styrofoam or the like injected thereinto. At the forming of the contour portion of the blades 113, use is made of the techniques of bending rework by a vendor, etc. and casting by means of a mold or the like.

Moreover, the wind driven generating equipment 100 is so structured that the power cable 72 led from the disk-shaped coaxial inversion generator 1 is passed through the interior of the support strut 102, drawn out therefrom at appropriate locations and connected to a controller not shown, etc.

Hereinbelow, the power generating operation of the wind driven generating equipment 100 comprising the disk-shaped coaxial inversion generator 1 according to this embodiment will be described.

The wind driven generating equipment 100 transmits the torque of the wind turbine 101 produced by wind power being a natural energy through the cylindrical wind turbine shaft body 111 to the housing main body 11. As mentioned above, the inversion magnets 41 are rotated in noncontact relationship by the magnetic force of the driving magnet 51 rotated together with the housing main body 11. In accordance with the rotation of the inversion magnets 41, the driven magnet 61 and the coil body 31 are rotated in noncontact relationship by the magnetic force thereof in the direction opposite to that of the housing main body 11. The relative velocity between the first and second flux linkage magnets 21, 22 of the housing main body 11 and the coil portion 32 of the coil body 31 is caused to be greater than the rotating speed of the housing main body 11 per se, for example, double, with the result that a generated power output as large as "4 times" the generated power output obtained when either the flux linkage magnets or the coil body is rotated while the other is fixed can be realized at the coil portion 32 of the coil body 31. The generated power output can be transmitted through the generated power output extraction portion 71 and the power cable 72 to a controller not shown.

Consequently, a wind driven generating equipment 100 ensuring strikingly large generated power output (that is, high conversion efficiency from wind energy to electric power), thus ensuring high practical value, can be realized.

The wind driven generating equipment 100 is so structured that the wind turbine 101 is supported rotatably around the tiered strut portion 103 on the basis of a both-end shaft support structure realized by the bearing portion 121 and the housing main body 11 of the disk-shaped coaxial inversion generator 1.

Therefore, the blades can be stably rotated for a prolonged period of time as compared with the conventional wind turbine shaft support structure employing the cantilevered shaft support structure in which no bearing is used in the arm portion on the upper side of the wind turbine to thereby cause a large moment load by blades to act on the lower shaft support portion of the wind turbine. As a result, a wind driven generating equipment 100 comprising a highly durable wind turbine 101 can be realized.

Moreover, the wind driven generating equipment 100 comprising the disk-shaped coaxial inversion generator 1 according to this embodiment has the advantages of attaining the reduction of mechanical loss, realization of a low-noise structure and maintenance facilitation by the disk-shaped coaxial inversion generator 1.

In the wind driven generating equipment 100, as the blades 113 of the wind turbine 101, a three-blades structure has been described. The blades are not limited to this structure, and use can be made of a wind turbine 101 with a 2-blades, 4-blades, 6-blades...or further more blades structure.

The magnet gear ratio among the driving magnet 51, inversion magnets 41 and driven magnet 61 in the disk-shaped coaxial inversion generator 1 has been set to 1:2 in the foregoing description. However, the magnet gear ratio is not limited thereto and can be varied to, for example, 1:n (n is a positive number, e.g., 1:1.1 to 1:20, etc., further n is a positive number within a theoretically possible range) by changing magnet array and quantity, so that a generated power output equivalent to the square of the value corresponding to the magnet gear ratio occurs at the coil portion 32 of the coil body 31. The generated power output can be transmitted through the power cable 72 to the outside.
Further, by using the disk-shaped coaxial inversion generator 1 with the above structure, the wind driven generating equipment 100 can be configured so as to obtain a generated power output equivalent to the square of the magnet gear ratio.

### INDUSTRIAL APPLICABILITY

The disk-shaped coaxial inversion generator 1 according to the present invention can find application in not only the foregoing wind driven generating equipment but also a hydraulic turbine generating equipment or the like by which a large generated power output can be obtained by the use of the torque of a water turbine rotated by hydraulic power being a natural energy. Further, the disk-shaped coaxial inversion generator can find application in a dynamo for bicycle, motorbike or car, a hydraulic turbine generator, a steam turbine generator, a propeller generator and other generators capable of converting rotational energy to electric power energy.

### REFERENCE SIGNS LIST

1: Disk-shaped coaxial inversion generator
2: Stationary annular shaft
3: Through hole
11: Housing main body
12: Upper housing
12a: Circular end surface portion
12b: Cylindrical side surface portion
12c: Hole for support strut insertion
13: Lower housing
13a: Circular end surface portion
13b: Cylindrical side surface portion
13c: Hole for support strut insertion
21: First flux linkage magnet
22: Second flux linkage magnet
31: Coil body
32: Coil portion
32a: Coil terminal
33: Coil bearing
41: Inversion magnet
42: Rotation support shaft
43: Circular groove
44: Circular groove
45: E-ring
46: Washer
47: Washer
48: E-ring
51: Driving magnet
61: Driven magnet
71: Generated power output extraction portion
72: Power cable
73: Brush
81: Upper annular bearing
82: Lower annular bearing
100: Wind driven generating equipment
101: Wind turbine
102: Support strut
103: Tiered strut portion
104: Tier portion
111: Cylindrical wind turbine shaft body
111a: Cover portion
112: Arm
113: Blade
113a: Opening portion
121: Bearing portion
122: Coupling portion

## Claims

1. A disk-shaped coaxial inversion generator comprising:
a stationary annular shaft provided at its central area with a support strut and fixed with the support strut;
a disk-shaped housing main body with a hollow interior provided at its central area with a hole for support strut insertion and rotatably supported by the stationary annular shaft, the disk-shaped housing main body configured to be rotated by a driving source utilizing a natural energy;
a disk-shaped flux linkage magnet attached to an internal surface of the housing main body;
a disk-shaped coil body whose coil portion faces a magnetic field region produced by the flux linkage magnet in noncontact relationship within the housing main body, the disk-shaped coil body having its central area rotatably mounted to the stationary annular shaft in a fashion of noncontact to the housing main body;
a plurality of rotatable inversion magnets each with its rotation support shaft provided in a direction orthogonal to an axial direction of the stationary annular shaft, the rotatable inversion magnets protruding radially from an outer circumference of the stationary annular shaft;
a disk-shaped driving magnet attached to the internal surface of the housing main body in an arrangement facing the inversion magnets in noncontact relationship;
a disk-shaped driven magnet attached to the disk-shaped coil body in an arrangement facing the inversion magnets in noncontact relationship and in an arrangement facing the driving magnet with the inversion magnets interposed therebetween; and
a generated power output extraction portion disposed across an inner circumference portion of the coil body and the stationary annular shaft,
so that the inversion magnets are rotated in noncontact relationship by a magnetic force produced by the driving magnet rotated together with the disk-shaped housing main body by means of the driving source, and so that in accordance with the rotation of the inversion magnets, by their magnetic force, the driven magnet and the coil body are rotated in noncontact relationship in a direction opposite to that of the housing main body, and so that a relative velocity between the flux linkage magnet of the housing main body and the coil portion of the coil body is caused to be greater than a rotating velocity of the housing main body per se, and so that any generated power output occurring at the coil portion of the coil body is extracted outside through the generated power output extraction portion and a power cable connected to the generated power output extraction portion.

2. A disk-shaped coaxial inversion generator comprising:
a stationary annular shaft provided at its central area with a support strut and fixed with the support strut;
a disk-shaped housing main body composed of an integral structure of a disk-shaped upper housing provided at its central area with a hole for support strut insertion and a disk-shaped lower housing provided at its central area with a hole for support strut insertion, the disk-shaped housing main body rotatably supported by the stationary annular shaft and configured to be rotated by a driving source utilizing a natural energy;
a disk-shaped first flux linkage magnet attached to an internal surface of the upper housing;
a disk-shaped second flux linkage magnet attached to an internal surface of the lower housing in an arrangement facing the first flux linkage magnet;
a disk-shaped coil body whose coil portion faces a field between the first flux linkage magnet and the second flux linkage magnet in noncontact relationship within the upper housing and lower housing, the disk-shaped coil body having its central area rotatably mounted to the stationary annular shaft in a fashion of noncontact to the upper housing and lower housing;
a plurality of rotatable inversion magnets each with its rotation support shaft provided in a direction orthogonal to an axial direction of the stationary annular shaft, the rotatable inversion magnets protruding radially from an outer circumference of the stationary annular shaft;
a disk-shaped driving magnet attached to the internal surface of the lower housing in an arrangement facing the inversion magnets in noncontact relationship;
a disk-shaped driven magnet attached to the disk-shaped coil body in an arrangement facing the inversion magnets in noncontact relationship and in an arrangement facing the driving magnet with the inversion magnets interposed therebetween; and
a generated power output extraction portion disposed across an inner circumference portion of the coil body and the stationary annular shaft,
so that the inversion magnets are rotated in noncontact relationship by a magnetic force produced by the driving magnet rotated together with the disk-shaped housing main body by means of the driving source, and so that in accordance with the rotation of the inversion magnets, by their magnetic force, the driven magnet and the coil body are rotated in noncontact relationship in a direction opposite to that of the housing main body, and so that a relative velocity between the first and second flux linkage magnets of the housing main body and the coil portion of the coil body is caused to be greater than a rotating velocity of the housing main body per se, and so that any generated power output occurring at the coil portion of the coil body is extracted outside through the generated power output extraction portion and a power cable connected to the generated power output extraction portion.

3. A disk-shaped coaxial inversion generator comprising:
a stationary annular shaft provided at its central area with a support strut and fixed with the support strut;
a disk-shaped housing main body composed of an integral structure of a disk-shaped upper housing provided at its central area with a hole for support strut insertion and a disk-shaped lower housing provided at its central area with a hole for support strut insertion, the disk-shaped housing main body rotatably supported by the stationary annular shaft and configured to be rotated by a driving source utilizing a natural energy;
a disk-shaped first flux linkage magnet attached to an internal surface of the upper housing;
a disk-shaped second flux linkage magnet attached to an internal surface of the lower housing in an arrangement facing the first flux linkage magnet;
a disk-shaped coil body whose coil portion faces a field between the first flux linkage magnet and the second flux linkage magnet in noncontact relationship within the upper housing and lower housing, the disk-shaped coil body having its central area rotatably mounted to the stationary annular shaft in a fashion of noncontact to the upper housing and lower housing;
a plurality of rotatable inversion magnets each with its rotation support shaft provided in a direction orthogonal to an axial direction of the stationary annular shaft, the rotatable inversion magnets protruding radially from an outer circumference of the stationary annular shaft;
a disk-shaped driving magnet attached to the internal surface of the lower housing in an arrangement facing the inversion magnets in noncontact relationship;
a disk-shaped driven magnet attached to the disk-shaped coil body in an arrangement facing the inversion magnets in noncontact relationship and in an arrangement facing the driving magnet with the inversion magnets interposed therebetween; and
a generated power output extraction portion disposed across an inner circumference portion of the coil body and the stationary annular shaft,
wherein a magnet gear ratio among the driving magnet, inversion magnets and driven magnet is set to 1:n (n is a positive number greater than 1),
so that the inversion magnets are rotated in noncontact relationship by a magnetic force produced by the driving magnet rotated together with the disk-shaped housing main body by means of the driving source, and so that in accordance with the rotation of the inversion magnets, by their magnetic force, the driven magnet and the coil body are rotated in noncontact relationship in a direction opposite to that of the housing main body, and so that a relative velocity between the first and second flux linkage magnets of the housing main body and the coil portion of the coil body is caused to correspond to the magnet gear ratio, and so that any generated power output equivalent to the square of the magnet gear ratio occurring at the coil portion of the coil body is extracted outside through the generated power output extraction portion and a power cable connected to the generated power output extraction portion.

4. A disk-shaped coaxial inversion generator comprising:
a stationary annular shaft provided at its central area with a support strut and fixed with the support strut;
a disk-shaped housing main body composed of an integral structure of a disk-shaped upper housing provided at its central area with a hole for support strut insertion and a disk-shaped lower housing provided at its central area with a hole for support strut insertion, the disk-shaped housing main body rotatably supported by the stationary annular shaft and configured to be rotated by a driving source utilizing a natural energy;
a disk-shaped first flux linkage magnet attached to an internal surface of the upper housing;
a disk-shaped second flux linkage magnet attached to an internal surface of the lower housing in an arrangement facing the first flux linkage magnet;
a disk-shaped coil body whose coil portion faces a field between the first flux linkage magnet and the second flux linkage magnet in noncontact relationship within the upper housing and lower housing, the disk-shaped coil body having its central area rotatably mounted to the stationary annular shaft in a fashion of noncontact to the upper housing and lower housing;
a plurality of rotatable inversion magnets each with its rotation support shaft provided in a direction orthogonal to an axial direction of the stationary annular shaft, the rotatable inversion magnets protruding radially from an outer circumference of the stationary annular shaft;
a disk-shaped driving magnet attached to the internal surface of the lower housing in an arrangement facing the inversion magnets in noncontact relationship;
a disk-shaped driven magnet attached to the disk-shaped coil body in an arrangement facing the inversion magnets in noncontact relationship and in an arrangement facing the driving magnet with the inversion magnets interposed therebetween; and
a generated power output extraction portion disposed across an inner circumference portion of the coil body and the stationary annular shaft,
so that the inversion magnets are rotated in noncontact relationship by a magnetic force produced by the driving magnet rotated together with the disk-shaped housing main body by means of the driving source, and so that in accordance with the rotation of the inversion magnets, by their magnetic force, the driven magnet and the coil body are rotated in noncontact relationship in a direction opposite to that of the housing main body, and so that a relative velocity between the first and second flux linkage magnets of the housing main body and the coil portion of the coil body is caused to be twice that attained when either the flux linkage magnets or the coil body is rotated while the other is fixed, and so that any generated power output equivalent to 4 times that realized when either the flux linkage magnets or the coil body is rotated while the other is fixed occurring at the coil portion of the coil body is extracted outside through the generated power output extraction portion and a power cable connected to the generated power output extraction portion.

5. A wind driven generating equipment including a disk-shaped coaxial inversion generator, comprising:
a support strut having at its upper portion a tiered strut portion suitable for mounting of a wind turbine which has a diameter smaller than that of the portion other than the upper portion, which support strut is configured to be vertically erected at an installation location;
a disk-shaped coaxial inversion generator disposed on a tier portion of the tiered strut portion with a gap therebetween; and
a wind turbine of vertical shaft/vertical vane type fitted to the tiered strut portion from above,
the disk-shaped coaxial inversion generator comprising:
a stationary annular shaft fitted at its central area with the tiered strut portion of the support strut in a pass-through fashion and fixed with the tiered strut portion;
a disk-shaped housing main body with a hollow interior provided at its central area with a hole for support strut insertion and rotatably supported by the stationary annular shaft, the disk-shaped housing main body configured to be rotated by a torque of the wind turbine;
a disk-shaped flux linkage magnet attached to an internal surface of the housing main body;
a disk-shaped coil body whose coil portion faces a magnetic field region produced by the flux linkage magnet in noncontact relationship within the housing main body, the disk-shaped coil body having its central area rotatably mounted to the stationary annular shaft in a fashion of noncontact to the housing main body;
a plurality of rotatable inversion magnets each with its rotation support shaft provided in a direction orthogonal to an axial direction of the stationary annular shaft, the rotatable inversion magnets protruding radially from an outer circumference of the stationary annular shaft;
a disk-shaped driving magnet attached to the internal surface of the housing main body in an arrangement facing the inversion magnets in noncontact relationship;
a disk-shaped driven magnet attached to the disk-shaped coil body in an arrangement facing the inversion magnets in noncontact relationship and in an arrangement facing the driving magnet with the inversion magnets interposed therebetween; and
a generated power output extraction portion disposed across an inner circumference portion of the coil body and the stationary annular shaft,
the wind turbine comprising:
a cylindrical wind turbine shaft body fitted to an outer circumference of the tiered strut portion on the disk-shaped coaxial inversion generator from above, the cylindrical wind turbine shaft body provided at its upper portion with a bearing portion mounted to an upper-end portion of the tiered strut portion and provided at its lower portion with a coupling portion with the housing main body so that the cylindrical wind turbine shaft body is arranged rotatably around the tiered strut portion on the basis of a both-end shaft support structure realized by the bearing portion and the housing main body;
two sets, arranged one above the other, of multiple arms projected in lateral directions from the cylindrical wind turbine shaft body with given interspaces; and
a plurality of vertically arranged blades each supported by the two sets, arranged one above the other, of arms,
so that a torque of the wind turbine produced by wind power is transmitted through the cylindrical wind turbine shaft body to the disk-shaped housing main body, so that the inversion magnets are rotated in noncontact relationship by a magnetic force produced by the driving magnet rotated together with the disk-shaped housing main body, and so that in accordance with the rotation of the inversion magnets, by their magnetic force, the driven magnet and the coil body are rotated in noncontact relationship in a direction opposite to that of the housing main body, and so that a relative velocity between the flux linkage magnet of the housing main body and the coil portion of the coil body is caused to be greater than a rotating velocity of the housing main body per se, and so that any generated power output occurring at the coil portion of the coil body is extracted outside through the generated power output extraction portion and a power cable connected to the generated power output extraction portion.

6. A wind driven generating equipment including a disk-shaped coaxial inversion generator, comprising:
a support strut having at its upper portion a tiered strut portion suitable for mounting of a wind turbine which has a diameter smaller than that of the portion other than the upper portion, which support strut is configured to be vertically erected at an installation location;
a disk-shaped coaxial inversion generator disposed on a tier portion of the tiered strut portion with a gap therebetween; and
a wind turbine of vertical shaft/vertical vane type fitted to the tiered strut portion from above,
the disk-shaped coaxial inversion generator comprising:
a stationary annular shaft provided at its central area with the support strut and fixed with the support strut;
a disk-shaped housing main body composed of an integral structure of a disk-shaped upper housing provided at its central area with a hole for support strut insertion and a disk-shaped lower housing provided at its central area with a hole for support strut insertion, the disk-shaped housing main body rotatably supported by the stationary annular shaft and configured to be rotated by a driving source utilizing a natural energy;
a disk-shaped first flux linkage magnet attached to an internal surface of the upper housing;
a disk-shaped second flux linkage magnet attached to an internal surface of the lower housing in an arrangement facing the first flux linkage magnet;
a disk-shaped coil body whose coil portion faces a field between the first flux linkage magnet and the second flux linkage magnet in noncontact relationship within the upper housing and lower housing, the disk-shaped coil body having its central area rotatably mounted to the stationary annular shaft in a fashion of noncontact to the upper housing and lower housing;
a plurality of rotatable inversion magnets each with its rotation support shaft provided in a direction orthogonal to an axial direction of the stationary annular shaft, the rotatable inversion magnets protruding radially from an outer circumference of the stationary annular shaft;
a disk-shaped driving magnet attached to the internal surface of the lower housing in an arrangement facing the inversion magnets in noncontact relationship;
a disk-shaped driven magnet attached to the disk-shaped coil body in an arrangement facing the inversion magnets in noncontact relationship and in an arrangement facing the driving magnet with the inversion magnets interposed therebetween; and
a generated power output extraction portion disposed across an inner circumference portion of the coil body and the stationary annular shaft,
the wind turbine comprising:
a cylindrical wind turbine shaft body fitted to an outer circumference of the tiered strut portion on the disk-shaped coaxial inversion generator from above, the cylindrical wind turbine shaft body provided at its upper portion with a bearing portion mounted to an upper-end portion of the tiered strut portion and provided at its lower portion with a coupling portion with the upper housing of the housing main body so that the cylindrical wind turbine shaft body is arranged rotatably around the tiered strut portion on the basis of a both-end shaft support structure realized by the bearing portion and the housing main body;
two sets, arranged one above the other, of multiple arms projected in lateral directions from the cylindrical wind turbine shaft body with given interspaces; and
a plurality of vertically arranged blades each supported by the two sets, arranged one above the other, of arms,
so that a torque of the wind turbine produced by wind power is transmitted through the cylindrical wind turbine shaft body to the disk-shaped housing main body, so that the inversion magnets are rotated in noncontact relationship by a magnetic force produced by the driving magnet rotated together with the disk-shaped housing main body, and so that in accordance with the rotation of the inversion magnets, by their magnetic force, the driven magnet and the coil body are rotated in noncontact relationship in a direction opposite to that of the housing main body, and so that a relative velocity between the first and second flux linkage magnets of the housing main body and the coil portion of the coil body is caused to be greater than a rotating velocity of the housing main body per se, and so that any generated power output occurring at the coil portion of the coil body is extracted outside through the generated power output extraction portion and a power cable connected to the generated power output extraction portion.

7. A wind driven generating equipment including a disk-shaped coaxial inversion generator, comprising:
a support strut having at its upper portion a tiered strut portion suitable for mounting of a wind turbine which has a diameter smaller than that of the portion other than the upper portion, which support strut is configured to be vertically erected at an installation location;
a disk-shaped coaxial inversion generator disposed on a tier portion of the tiered strut portion with a gap therebetween; and
a wind turbine of vertical shaft/vertical vane type fitted to the tiered strut portion from above,
the disk-shaped coaxial inversion generator comprising:
a stationary annular shaft provided at its central area with the support strut and fixed with the support strut;
a disk-shaped housing main body composed of an integral structure of a disk-shaped upper housing provided at its central area with a hole for support strut insertion and a disk-shaped lower housing provided at its central area with a hole for support strut insertion, the disk-shaped housing main body rotatably supported by the stationary annular shaft and configured to be rotated by a driving source utilizing a natural energy;
a disk-shaped first flux linkage magnet attached to an internal surface of the upper housing;
a disk-shaped second flux linkage magnet attached to an internal surface of the lower housing in an arrangement facing the first flux linkage magnet;
a disk-shaped coil body whose coil portion faces a field between the first flux linkage magnet and the second flux linkage magnet in noncontact relationship within the upper housing and lower housing, the disk-shaped coil body having its central area rotatably mounted to the stationary annular shaft in a fashion of noncontact to the upper housing and lower housing;
a plurality of rotatable inversion magnets each with its rotation support shaft provided in a direction orthogonal to an axial direction of the stationary annular shaft, the rotatable inversion magnets protruding radially from an outer circumference of the stationary annular shaft;
a disk-shaped driving magnet attached to the internal surface of the lower housing in an arrangement facing the inversion magnets in noncontact relationship;
a disk-shaped driven magnet attached to the disk-shaped coil body in an arrangement facing the inversion magnets in noncontact relationship and in an arrangement facing the driving magnet with the inversion magnets interposed therebetween; and
a generated power output extraction portion disposed across an inner circumference portion of the coil body and the stationary annular shaft,
wherein a magnet gear ratio among the driving magnet, inversion magnets and driven magnet is set to 1:n (n is a positive number greater than 1),
the wind turbine comprising:
a cylindrical wind turbine shaft body fitted to an outer circumference of the tiered strut portion on the disk-shaped coaxial inversion generator from above, the cylindrical wind turbine shaft body provided at its upper portion with a bearing portion mounted to an upper-end portion of the tiered strut portion and provided at its lower portion with a coupling portion with the upper housing of the housing main body so that the cylindrical wind turbine shaft body is arranged rotatably around the tiered strut portion on the basis of a both-end shaft support structure realized by the bearing portion and the housing main body;
two sets, arranged one above the other, of multiple arms projected in lateral directions from the cylindrical wind turbine shaft body with given interspaces; and
a plurality of vertically arranged blades each supported by the two sets, arranged one above the other, of arms,
so that a torque of the wind turbine produced by wind power is transmitted through the cylindrical wind turbine shaft body to the disk-shaped housing main body, so that the inversion magnets are rotated in noncontact relationship by a magnetic force produced by the driving magnet rotated together with the disk-shaped housing main body, and so that in accordance with the rotation of the inversion magnets, by their magnetic force, the driven magnet and the coil body are rotated in noncontact relationship in a direction opposite to that of the housing main body, and so that a relative velocity between the first and second flux linkage magnets of the housing main body and the coil portion of the coil body is caused to correspond to the magnet gear ratio, and so that any generated power output equivalent to the square of the magnet gear ratio occurring at the coil portion of the coil body is extracted outside through the generated power output extraction portion and a power cable connected to the generated power output extraction portion.

8. A wind driven generating equipment including a disk-shaped coaxial inversion generator, comprising:
a support strut having at its upper portion a tiered strut portion suitable for mounting of a wind turbine which has a diameter smaller than that of the portion other than the upper portion, which support strut is configured to be vertically erected at an installation location;
a disk-shaped coaxial inversion generator disposed on a tier portion of the tiered strut portion with a gap therebetween; and
a wind turbine of vertical shaft/vertical vane type fitted to the tiered strut portion from above,
the disk-shaped coaxial inversion generator comprising:
a stationary annular shaft provided at its central area with the support strut and fixed with the support strut;
a disk-shaped housing main body composed of an integral structure of a disk-shaped upper housing provided at its central area with a hole for support strut insertion and a disk-shaped lower housing provided at its central area with a hole for support strut insertion, the disk-shaped housing main body rotatably supported by the stationary annular shaft and configured to be rotated by a driving source utilizing a natural energy;
a disk-shaped first flux linkage magnet attached to an internal surface of the upper housing;
a disk-shaped second flux linkage magnet attached to an internal surface of the lower housing in an arrangement facing the first flux linkage magnet;
a disk-shaped coil body whose coil portion faces a field between the first flux linkage magnet and the second flux linkage magnet in noncontact relationship within the upper housing and lower housing, the disk-shaped coil body having its central area rotatably mounted to the stationary annular shaft in a fashion of noncontact to the upper housing and lower housing;
a plurality of rotatable inversion magnets each with its rotation support shaft provided in a direction orthogonal to an axial direction of the stationary annular shaft, the rotatable inversion magnets protruding radially from an outer circumference of the stationary annular shaft;
a disk-shaped driving magnet attached to the internal surface of the lower housing in an arrangement facing the inversion magnets in noncontact relationship;
a disk-shaped driven magnet attached to the disk-shaped coil body in an arrangement facing the inversion magnets in noncontact relationship and in an arrangement facing the driving magnet with the inversion magnets interposed therebetween; and
a generated power output extraction portion disposed across an inner circumference portion of the coil body and the stationary annular shaft,
the wind turbine comprising:
a cylindrical wind turbine shaft body fitted to an outer circumference of the tiered strut portion on the disk-shaped coaxial inversion generator from above, the cylindrical wind turbine shaft body provided at its upper portion with a bearing portion mounted to an upper-end portion of the tiered strut portion and provided at its lower portion with a coupling portion with the upper housing of the housing main body so that the cylindrical wind turbine shaft body is arranged rotatably around the tiered strut portion on the basis of a both-end shaft support structure realized by the bearing portion and the housing main body;
two sets, arranged one above the other, of triple arms projected in lateral directions from the cylindrical wind turbine shaft body with given interspaces; and
three vertically arranged blades each supported by the two sets, arranged one above the other, of arms,
so that a torque of the wind turbine produced by wind power is transmitted through the cylindrical wind turbine shaft body to the disk-shaped housing main body, and so that the inversion magnets are rotated in noncontact relationship by a magnetic force produced by the driving magnet rotated together with the disk-shaped housing main body, and so that in accordance with the rotation of the inversion magnets, by their magnetic force, the driven magnet and the coil body are rotated in noncontact relationship in a direction opposite to that of the housing main body, and so that a relative velocity between the first and second flux linkage magnets of the housing main body and the coil portion of the coil body is caused to be twice that attained when either the flux linkage magnets or the coil body is rotated while the other is fixed, and so that any generated power output equivalent to 4 times that realized when either the flux linkage magnets or the coil body is rotated while the other is fixed occurring at the coil portion of the coil body is extracted outside through the generated power output extraction portion and a power cable connected to the generated power output extraction portion.
